# EUROPEAN PATENT APPLICATION

(11) **EP 4 599 957 A1**
(43) Date of publication of application: **13.08.2025**
(21) Application number: 23874896.6
(22) Date of filing: 04.10.2023
(51) Int. Cl.: B21D 28/02, H02K 15/02, B32B 37/10, B32B 39/00, B21D 43/22, H01F 41/02

(54) **LAMINATE MANUFACTURING APPARATUS, MOTOR CORE MANUFACTURING SYSTEM, AND LAMINATE MANUFACTURING METHOD**

(30) Priority: 05.10.2022 JP 2022160924
(71) Applicant: Mitsui High-Tec, Inc., Kitakyushu-shi, Fukuoka 807-8588 (JP)
(72) Inventor: SAKUDA, Ryo, Kitakyushu-shi, Fukuoka 807-8588 (JP)
(74) Representative: Hoefer & Partner Patentanwälte mbB
(86) International application number: PCT/JP2023/036195
(87) International publication number: WO 2024/075770

(57) **Abstract**

A laminate manufacturing apparatus of the present disclosure comprises a die unit (10) that performs a stamping process using an upper die (11) and a lower die (12), a base (20) that has a ground-contact surface for a floor (FL) and supports the lower die (12), and a support unit (30) that supports, from below, a workpiece that has been stamped by the upper die (11) and the lower die (12). The lower end portion (301) of the support unit (30) is disposed on or higher than the ground-contact surface of the base (20), and lower than an upper surface (121) of the lower die (12).

## Description

### TECHNICAL FIELD

The present disclosure relates to a laminated body manufacturing apparatus, a motor core manufacturing system, and a laminated body manufacturing method.

### BACKGROUND ART

Patent Literature 1 discloses that, in a laminated body manufacturing method, a lower receiving pad that supports a laminated body from below and a support portion that operates the lower receiving pad in an upper-lower direction are provided.

### CITATION LIST

### PATENT LITERATURE

Patent Literature 1: JP2001-096318A

### SUMMARY OF INVENTION

### TECHNICAL PROBLEM

In recent years, due to technological advances in motor cores and increased performance demands for the motor cores, a proportion of a post-punching processing step, which is performed after a laminated body manufacturing step of manufacturing a laminated body, has increased in a motor core manufacturing step. The length of the post-punching processing step and an ideal arrangement vary depending on the product, and accordingly, a preferred arrangement place of a laminated body manufacturing apparatus also changes more frequently. Therefore, it is necessary to improve a degree of freedom of arrangement also in the apparatus related to the laminated body manufacturing step.

An object of the present disclosure is to provide a laminated body manufacturing apparatus of a motor core, a motor core manufacturing system, and a laminated body manufacturing method with an improved degree of freedom in arrangement.

### SOLUTION TO PROBLEM

A laminated body manufacturing apparatus according to an aspect of the present disclosure includes:
a die unit configured to perform punching by an upper die and a lower die;
a base including a ground plane to a floor and configured to support the lower die; and
a support portion configured to support a workpiece punched by the upper die and the lower die from below, in which
a lower end portion of the support portion is disposed at the same height as or above the ground plane of the base and below an upper surface of the lower die.

A motor core manufacturing system according to an aspect of the present disclosure includes:
the laminated body manufacturing apparatus described above; and
a post-punching processing apparatus configured to perform post-punching processing on the laminated body, in which
the laminated body manufacturing apparatus and the post-punching processing apparatus are installed on a common floor at the same height.

A laminated body manufacturing method according to an aspect of the present disclosure performed using the laminated body manufacturing apparatus described above.

A laminated body manufacturing method according to an aspect of the present disclosure in which a workpiece is punched into a predetermined shape by a die unit disposed in parallel on a scaffold at a predetermined height from a floor, and the punched workpiece is laminated in a lower die of the die unit to form a laminated body, the method comprising:
a lamination step of supporting the laminated body from below by a support portion provided between the floor and the lower die;
a discharge step of discharging the laminated body from the lower die;
a first conveyance step of conveying the discharged laminated body via a first conveyance path at a position higher than the scaffold;
a second conveyance step of lowering the laminated body via a second conveyance path connected to the first conveyance path; and
a third conveyance step of conveying the lowered laminated body via a third conveyance path connected to the second conveyance path and located at a position lower than the scaffold.

### ADVANTAGEOUS EFFECTS OF INVENTION

According to the present disclosure, it is possible to provide the laminated body manufacturing apparatus of the motor core, the motor core manufacturing system, and the laminated body manufacturing method with an improved degree of freedom in arrangement.

### BRIEF DESCRIPTION OF DRAWINGS

FIG. 1 is a schematic view of a part of a laminated body manufacturing apparatus.
FIG. 2 illustrates a lower die and a portion below the lower die in the laminated body manufacturing apparatus, and a post-punching processing apparatus.
FIG. 3 illustrates a support portion related to a lamination step.
FIG. 4 illustrates the support portion related to a first conveyance step.
FIG. 5 illustrates a manufacturing apparatus and a support portion according to a comparative example.
FIG. 6 is an arrow view seen from a direction VI in FIG. 2.

### DESCRIPTION OF EMBODIMENTS

Hereinafter, as an embodiment of the present disclosure, a laminated body manufacturing apparatus and a motor core manufacturing system will be described with reference to the drawings. Dimensions of each member illustrated in the drawings may be different from actual dimensions of each member for convenience of description.

For the convenience of description, an "upper-lower direction", a "left-right direction", and a "front-rear direction" will be appropriately referred to. Here, the "upper-lower direction" is a direction including an "upper direction" and a "lower direction". The "left-right direction" is a direction including a "right direction" and a "left direction". The "front-rear direction" indicates a "front direction" and a "rear direction". A reference sign U in the drawings described below indicates the upper direction. A reference sign D indicates the lower direction. A reference sign F indicates the front direction. A reference sign B indicates the rear direction. A reference sign L indicates the left direction. A reference sign R indicates the right direction. A "horizontal direction" is a direction including the "left-right direction" and the "front-rear direction".

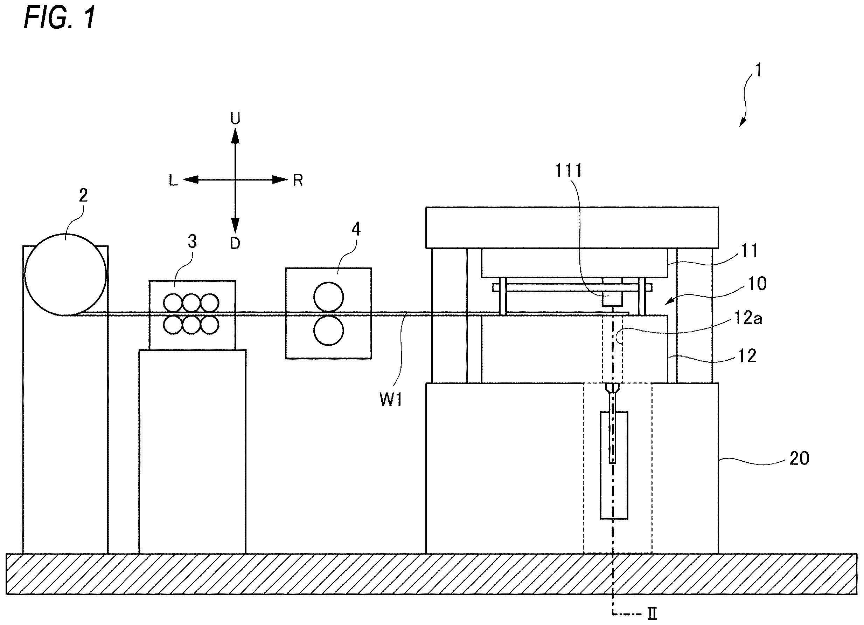

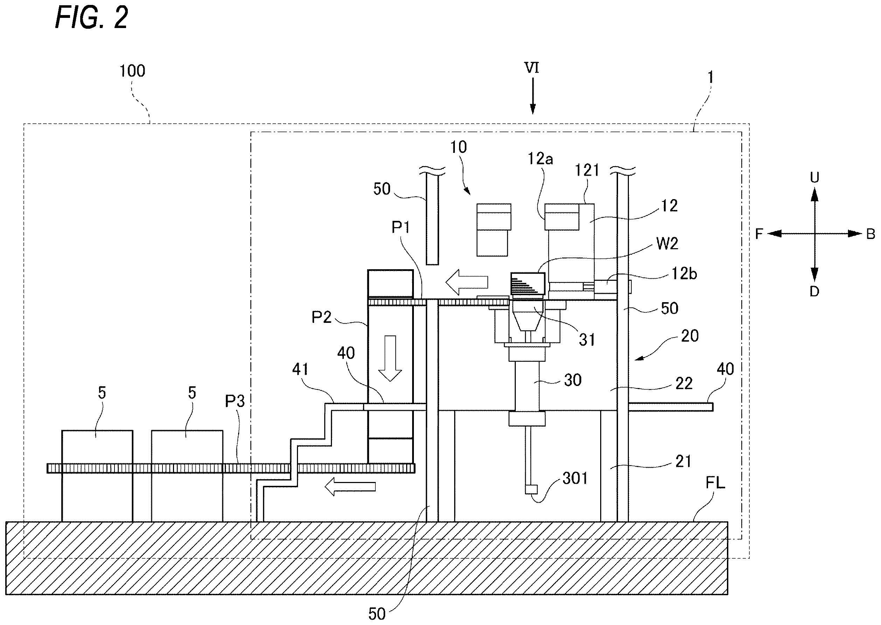

FIG. 1 is a schematic view of a part of an apparatus 1 for manufacturing a laminated body W2. FIG. 2 is a diagram illustrating a lower die 12 and a portion below the lower die 12 in the apparatus 1 for manufacturing the laminated body W2, and a post-punching processing apparatus 5. The apparatus 1 for manufacturing the laminated body W2 punches a sheet-shaped workpiece W1 to form a punched member, and laminates the punched members to manufacture the laminated body W2. The punched member is an example of a punched workpiece. The workpiece W1 wound in a coil shape is supplied from an uncoiler 2, and is fed to the manufacturing apparatus 1 by a feeding device 4 via a leveler 3 that corrects the curl of the workpiece W1. In the present embodiment, a case where the workpiece W1 is an electromagnetic steel plate, and the laminated body W2 manufactures a motor core that is a core portion in a rotor or a stator of a rotary electric machine is exemplified. The manufacturing apparatus 1 and the post-punching processing apparatus 5 constitute at least a part of the motor core manufacturing system.

As illustrated in FIGS. 1 and 2, the manufacturing apparatus 1 includes a die unit 10, a base 20, and a support portion 30. The die unit 10 includes an upper die 11 and a lower die 12. The workpiece W1 is fed between the upper die 11 and the lower die 12. The upper die 11 includes a punching punch 111. The upper die 11 is configured such that the upper die 11 is displaced in the upper-lower direction by a driving device (not illustrated). The lower die 12 is provided below the upper die 11. A die hole 12a through which a part of the punching punch 111 can be inserted is formed in the lower die 12. When the workpiece W1 is located between the upper die 11 and the lower die 12, the upper die 11 is displaced downward such that a part of the punching punch 111 is inserted into the die hole 12a, whereby the workpiece W1 is punched to form the punched member. The punched member is conveyed downward through the die hole 12a.

The lower die 12 further includes a pusher 12b. The pusher 12b pushes out the laminated body W2 manufactured by laminating the punched members toward a first conveyance path P1 described later. A pushing direction of the pusher 12b may be different from that of the present embodiment.

The base 20 includes a leg portion 21 that is in contact with a floor FL and a placement table 22 on which the lower die 12 is placed. The leg portion 21 includes a ground plane that grounds the floor FL on which the manufacturing apparatus 1 is placed. The leg portion 21 supports the placement table 22 from below, and the placement table 22 supports the lower die 12 from below.

The support portion 30 is configured to support the punched member from below when the punched member is formed by punching the workpiece W1. The support portion 30 includes a pad 31 that is in contact with the punched member and supports the punched member from below.

The support portion 30 includes a cylinder having a hydraulic chamber therein and a rod provided to be movable forward and backward in the cylinder. The cylinder is fixed to the base 20. The pad 31 is provided at a tip of the rod. Accordingly, the support portion 30 is configured to expand and contract in the upper-lower direction. By changing a protruding length of the rod from the cylinder, the height at which the punched member is supported can be adjusted.

The support portion 30 is provided such that a lower end portion 301 thereof is located above the ground plane. The support portion 30 is provided such that the lower end portion 301 thereof is located below an upper surface 121 of the lower die 12. In other words, the support portion 30 is provided in a state of floating from the floor FL on which the manufacturing apparatus 1 is placed.

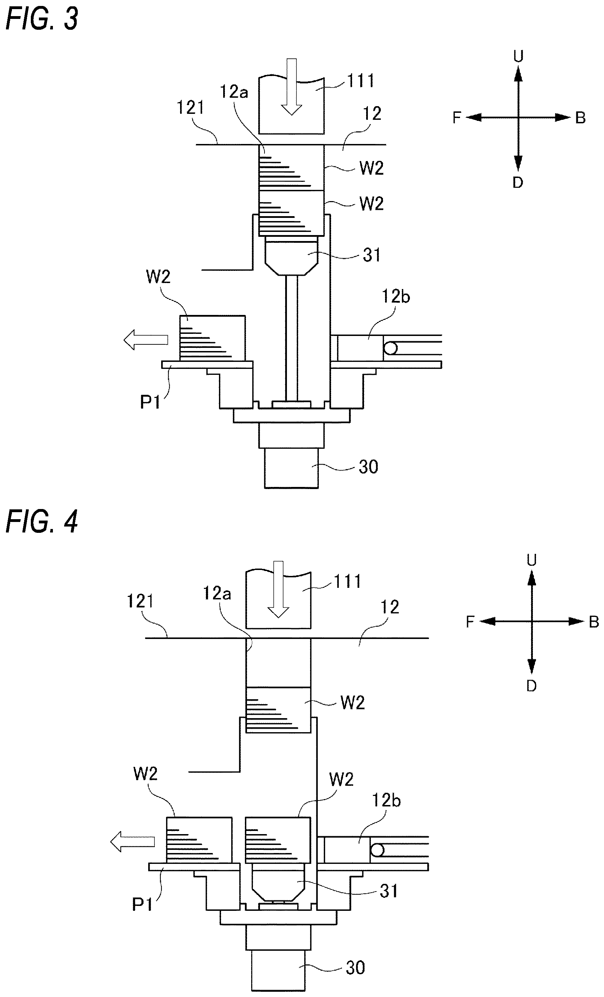

Next, a manufacturing method of the laminated body W2 using the support portion 30 will be described. FIG. 3 illustrates the support portion 30 related to a lamination step. FIG. 4 illustrates the support portion 30 related to a first conveyance step. The manufacturing method of the laminated body W2 includes the lamination step, the first conveyance step, a second conveyance step, and a third conveyance step.

The lamination step includes supporting the laminated body W2 from below by the support portion 30 provided between the floor FL and the lower die 12. As illustrated in FIG. 3, in the lamination step in which the punched member is being produced and the laminated body W2 is being manufactured, the laminated body W2 is in contact with the die hole 12a and is pressurized in a central axis direction of the laminated body W2. At this time, the support portion 30 supports the laminated body W2 in a relatively extended state. When the laminated body W2 is pressurized in the central axis direction thereof, the laminated body W2 is likely to be deformed so as to bend downward, but the downward bending of the laminated body W2 can be suppressed by supporting the laminated body W2 from below with the support portion 30.

The support portion 30 controls the protruding length of the rod by adjusting the hydraulic pressure inside the cylinder, and changes a length of the support portion 30 according to the number of laminated punched members or the like. For example, when the number of punched members laminated on the pad 31 is small, the rod advances and the support portion 30 extends relatively long. When the number of punched members laminated on the pad 31 increases, the hydraulic pressure is controlled such that the rod retracts and the support portion 30 contracts.

The discharge step includes discharging the laminated body W2 from the lower die 12. In the discharge step, when the laminating of the punched members is completed and the laminated body W2 is completed, the laminated body W2 is discharged downward from the die hole 12a of the lower die 12. The laminated body W2 discharged downward from the die hole 12a of the lower die 12 is pushed forward by the pusher 12b.

The first conveyance step includes conveying the discharged laminated body via the first conveyance path P1 at a position higher than a scaffold 40. In the first conveyance step, the laminated body W2 pushed out by the pusher 12b is further conveyed forward by the first conveyance path P1 (see FIG. 2).

The second conveyance step includes lowering the laminated body W2 via the second conveyance path P2 connected to the first conveyance path P1. As illustrated in FIG. 2, in the second conveyance step of the present embodiment, the laminated body W2 conveyed forward by the first conveyance path P1 is fed downward through the second conveyance path P2.

The third conveyance step includes conveying the lowered laminated body W2 via a third conveyance path P3 connected to the second conveyance path P2 and located at a position lower than the scaffold 40. In the third conveyance step, the laminated body W2 conveyed downward by the second conveyance path P2 is fed to the post-punching processing apparatus 5 through the third conveyance path P3. In the post-punching processing apparatus 5, embedding of a permanent magnet in the laminated body W2, molding, welding, measurement, inspection, and the like of a resin material may be performed. Details of the first conveyance path P1, the second conveyance path P2, and the third conveyance path P3 will be described later.

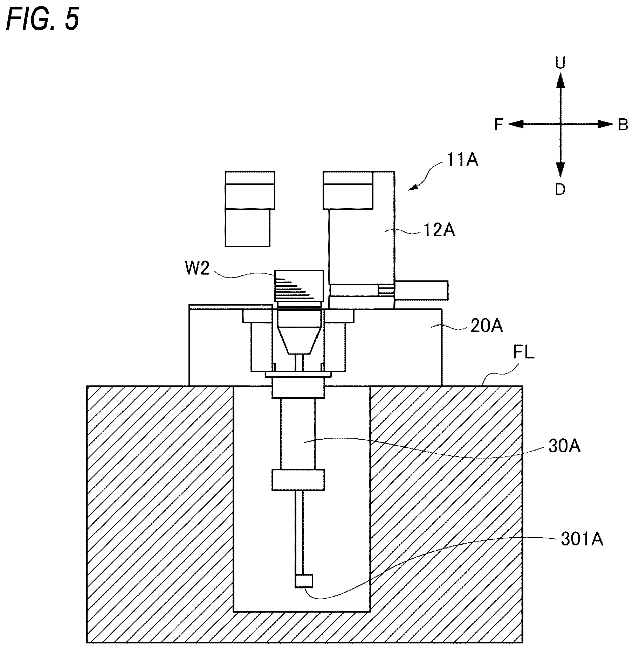

FIG. 5 illustrates a manufacturing apparatus and a support portion 30A according to a comparative example. In the manufacturing apparatus according to the comparative example, the punched members can be laminated while the punched members are supported from below by the support portion 30A. However, the manufacturing apparatus according to the comparative example is different from the manufacturing apparatus according to the present embodiment in that a recess is formed in a floor on which the manufacturing apparatus according to the comparative example is placed, and accordingly, a lower end portion 301A of the support portion 30A is provided below the ground plane of the base 20A. In the manufacturing apparatus according to the comparative example, a die unit 10A is provided at a position lower than the height of an operator so as to facilitate maintenance of a die.

In the manufacturing apparatus as illustrated in FIG. 5, the die unit 10A is generally configured to be provided in a portion close to the ground, mainly with an emphasis on ease of maintenance work of the die. Therefore, the lower end portion 301A of the support portion 30A for supporting the laminated body W2 from below is provided below the floor by forming the recess in the floor.

However, in recent years, the proportion occupied by the post-punching processing apparatus in the manufacturing system has increased, such as an increase in the number of processing steps and execution of an inspection step for each processing step. Further, when the specification of the laminated body W2 to be manufactured is changed, the arrangement and length of the post-punching processing apparatus are also changed. Therefore, the apparatus for manufacturing the laminated body W2 also needs to be configured to be easily rearranged in consideration of the balance with the post-punching processing apparatus. However, when there is the recess for disposing the support portion 30A as in the comparative example, it is difficult to dispose another apparatus at a place where the apparatus for manufacturing the laminated body W2 is present. Further, it is necessary to form a new recess in a place where an apparatus for manufacturing the laminated body W2 is newly provided. As described above, with respect to the manufacturing apparatus for the laminated body W2, it has been desirable to improve the degree of freedom in rearrangement of the manufacturing apparatus rather than the accessibility to the die.

In the manufacturing apparatus 1 of the present embodiment, the lower end portion 301 of the support portion 30 is disposed at the same position as or above the ground plane of the base 20. Therefore, when the manufacturing apparatus 1 is disposed, the recess may not be formed in the floor FL, and the manufacturing apparatus 1 can be disposed on the flat floor FL. Accordingly, even when it is necessary to rearrange the apparatus 1 for manufacturing the laminated body W2, it becomes easy to rearrange the other device to the location where the apparatus 1 for manufacturing the laminated body W2 was previously located, and time and effort for disposing the apparatus 1 for manufacturing the laminated body W2 at a new arrangement place can be saved.

The manufacturing system 100 of the motor core of the present embodiment includes the apparatus 1 for manufacturing the laminated body W2 and the post-punching processing apparatus 5, and the apparatus 1 for manufacturing the laminated body W2 and the post-punching processing apparatus 5 are installed on the common floor FL at the same height. Therefore, it is possible to reduce labor related to the rearrangement. In particular, since the present manufacturing system 100 does not require the recess for installation of a punching device, it is possible to suppress labor related to reinstallation of the punching device. Further, since it is easy to dispose the other device at the place where the punching device is installed, the degree of freedom in disposing the entire manufacturing system 100 of the motor core is improved.

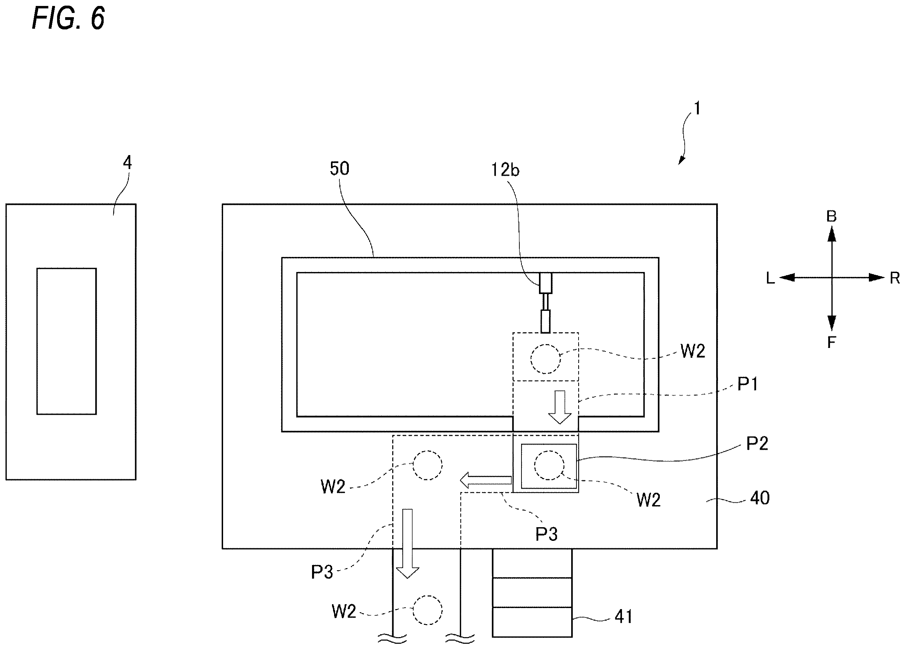

FIG. 6 is an arrow view seen from a direction VI in FIG. 2. As illustrated in FIGS. 2 and 6, the manufacturing apparatus 1 of the present embodiment includes the scaffold 40. In the present embodiment, the scaffold 40 is disposed to surround the manufacturing apparatus 1. As illustrated in FIG. 2, the height of the scaffold 40 is preferably higher than the ground plane of the base 20 and lower than the upper surface 121 of the lower die 12.

In the comparative example illustrated in FIG. 5, the recess is formed in the floor FL, and the ease of access to the die unit 10A is ensured. However, in the example illustrated in FIG. 6, since recess is not formed in the floor FL, the height from the floor FL to the die unit 10 tends to be high. Therefore, in the example illustrated in FIG. 6, since the scaffold 40 is provided at a height higher than the ground plane of the base 20 and lower than the upper surface 121 of the lower die 12, the ease of access to the die unit 10 is maintained.

Further, as illustrated in FIG. 2, in the present embodiment, a stepped portion 41 reaching an upper surface of the scaffold 40 is provided. Accordingly, it is easy for a worker to access the die unit 10.

The manufacturing apparatus 1 of the present embodiment includes the first conveyance path P1, the second conveyance path P2, and the third conveyance path P3. The first conveyance path P1 is configured to carry out the manufactured laminated body W2 in the horizontal direction from directly below the lower die 12. The second conveyance path P2 is configured to lower the laminated body W2 conveyed by the first conveyance path P1. The third conveyance path P3 is configured to convey the laminated body W2 conveyed by the second conveyance path P2 to the post-punching processing apparatus 5 in the horizontal direction. The first conveyance path P1 and the second conveyance path P2, and the second conveyance path P2 and the third conveyance path P3 are connected to each other. The first conveyance path P1 and the third conveyance path P3 may be, for example, belt conveyors. The second conveyance path P2 is an example of an elevating portion. The second conveyance path P2 may be an elevator that returns upward after conveying the laminated body W2 downward. The direction in which the first conveyance path P1 and the third conveyance path P3 convey the laminated body W2 is not limited to the example of the present embodiment.

The first conveyance path P1 is provided at substantially the same height as an upper surface of the base 20. The second conveyance path P2, which is the elevating portion, is configured to lower the laminated body W2 from a height substantially equal to the upper surface of the base 20 to a height above the ground plane and below the scaffold 40. Accordingly, since the third conveyance path P3 is provided at the height lower than the scaffold 40, the manufacturing apparatus 1 of the present embodiment can easily provide better workability for the worker who works in the post-punching processing apparatus 5.

As illustrated in FIGS. 2 and 6, the second conveyance path P2, which is the elevating portion, is provided such that a part of a side surface thereof is surrounded by the scaffold 40. In other words, the second conveyance path P2 is provided to penetrate the scaffold 40.

A part of the third conveyance path P3 is provided below the scaffold 40. "Below the scaffold 40" indicates a region covered by the scaffold 40 when viewed from above. For example, in the present embodiment, as illustrated in FIG. 6, the laminated body W2 lowered by the second conveyance path P2 is conveyed in the left direction below the scaffold 40. Thereafter, the laminated body W2 is conveyed in the front direction. At this time, the third conveyance path P3 that conveys the laminated body W2 in the left direction and the part of the third conveyance path P3 that conveys the laminated body W2 to the front are covered with the scaffold 40 when viewed from above.

The third conveyance path P3 of the present embodiment is provided such that at least a part thereof passes below the scaffold 40. Accordingly, space saving can be achieved in the manufacturing apparatus 1 including the third conveyance path P3 and the scaffold 40.

As illustrated in FIGS. 2 and 6, the manufacturing apparatus 1 of the present embodiment includes a soundproof wall 50. The soundproof wall 50 is provide to cover at least a side and an upper side of the die unit 10. As in the present embodiment, the soundproof wall 50 may be provided to also cover a side of the base 20. Further, in order to improve access to the die unit 10, a door (not illustrated) may be provided on a side surface of the soundproof wall 50.

An opening is formed in the soundproof wall 50. The opening is formed in a size through which the laminated body W2 carried out from directly below the lower die 12 by the first conveyance path P1 can pass.

Since the manufacturing apparatus 1 of the present embodiment includes the soundproof wall 50, it is possible to suppress an influence of noise related to the manufacturing of the laminated body W2 on the surroundings. Further, since the opening is formed in the soundproof wall 50, even if the soundproof wall 50 is provided, it is easy to smoothly carry out the laminated body W2.

The manufacturing method of the laminated body W2 of the present embodiment is a method for manufacturing the laminated body W2 using the manufacturing apparatus 1 described above. Therefore, effects equivalent to those of the manufacturing apparatus 1 described above can be obtained.

Since the manufacturing method of the laminated body W2 of the present embodiment includes the lamination step of supporting the laminated body W2 from below by the support portion 30 provided between the floor FL and the lower die 12, it is not necessary to form a recess for providing the support portion 30 in the floor FL. Therefore, the degree of freedom in the arrangement of the apparatus 1 for manufacturing the laminated body W2 is improved.

Further, the manufacturing method of the laminated body W2 of the present embodiment includes the second conveyance step and the third conveyance step. In the second conveyance step, the laminated body W2 at a position higher than the scaffold 40 is lowered vertically via the second conveyance path P2. In the third conveyance step, the laminated body W2 is conveyed in the horizontal direction via the third conveyance path P3 connected to the second conveyance path P2 and located at the position lower than the scaffold 40. Since the support portion is provided between the floor and the lower die, when the laminated body is conveyed to the post-punching processing apparatus at the height of the first conveyance path, the laminated body is fed away from the floor, and thus workability in the post-punching processing apparatus is poor. However, since the laminated body W2 is conveyed at a height close to the floor FL by the second conveyance step and the third conveyance step, workability in the step after the laminated body W2 is manufactured is improved.

Although the embodiment of the present disclosure has been described above, it is needless to say that the technical scope of the present disclosure should not be construed as being limited by the description of the embodiment. It should be understood by those skilled in the art that the present embodiment is merely an example, and various modifications of the embodiment are possible within the scope of the invention described in the claims. The technical scope of the present disclosure should be determined based on the scope of the invention described in the claims and the equivalent scope thereof.

Configurations listed below also constitute a part of the present disclosure.
(1): A laminated body manufacturing apparatus includes:
   a die unit configured to perform punching by an upper die and a lower die;
   a base including a ground plane to a floor and configured to support the lower die; and
   a support portion configured to support a workpiece punched by the upper die and the lower die from below, in which
   a lower end portion of the support portion is disposed at the same height as or above the ground plane of the base and below an upper surface of the lower die.
(2): In the laminated body manufacturing apparatus according to the above (1),
   a scaffold is provided at the same height as or above the ground plane of the base and below the upper surface of the lower die.
(3): In the laminated body manufacturing apparatus according to the above (2),
   a stepped portion from a height of the ground plane to an upper surface of the scaffold is provided.
(4): The laminated body manufacturing apparatus according to the above (2) or (3) further includes:
   an elevating portion configured to lower the punched workpiece to a height above the ground plane and below the scaffold.
(5): In the laminated body manufacturing apparatus according to the above (4),
   at least a part of a side surface of the elevating portion is surrounded by the scaffold.
(6): In the laminated body manufacturing apparatus according to the above (4) or (5),
   at least a part of a conveyance path for conveying the workpiece lowered by the elevating portion is provided below the scaffold.
(7): The laminated body manufacturing apparatus according to any one of the above (1) to (6) further includes:
   a soundproof wall provided to cover at least an upper side and a side of the die unit, in which
   the soundproof wall is provided with an opening through which the laminated body is allowed to pass.
(8): A motor core manufacturing system includes:
   the laminated body manufacturing apparatus according to any one of the above (1) to (7); and
   a post-punching processing apparatus configured to perform post-punching processing on the laminated body, in which
   the laminated body manufacturing apparatus and the post-punching processing apparatus are installed on a common floor at the same height.
(9): A laminated body manufacturing method of the motor core performed using the manufacturing apparatus according to any one of the above (1) to (7).
(10): A laminated body manufacturing method in which a workpiece is punched into a predetermined shape by a die unit disposed in parallel on a scaffold at a predetermined height from a floor, and the punched workpiece is laminated in a lower die of the die unit to form a laminated body, the method includes:
   a lamination step of supporting the laminated body from below by a support portion provided between the floor and the lower die;
   a discharge step of discharging the laminated body from the lower die;
   a first conveyance step of conveying the discharged laminated body via a first conveyance path at a position higher than the scaffold;
   a second conveyance step of lowering the laminated body via a second conveyance path connected to the first conveyance path; and
   a third conveyance step of conveying the lowered laminated body via a third conveyance path connected to the second conveyance path and located at a position lower than the scaffold.

The present application appropriately refers to the contents disclosed in Japanese Patent Application (Japanese Patent Application No. 2022-160924) filed on October 5, 2022.

### REFERENCE SIGNS LIST

1: manufacturing apparatus
2: uncoiler
3: leveler
4: feeding device
5: post-punching processing apparatus
10, 10A: die unit
11: upper die
12: lower die
12a: die hole
12b: pusher
20, 20A: base
21: leg portion
22: placement table
30, 30A: support portion
31: pad
40: scaffold
41: stepped portion
50: soundproof wall
100: manufacturing system
111: punch
121: upper surface
301, 301A: lower end portion
FL: floor
P1: first conveyance path
P2: second conveyance path
P3: third conveyance path
W1: workpiece
W2: laminated body

## Claims

1. A laminated body manufacturing apparatus, comprising:
a die unit configured to perform punching by an upper die and a lower die;
a base including a ground plane to a floor and configured to support the lower die; and
a support portion configured to support a workpiece punched by the upper die and the lower die from below, wherein
a lower end portion of the support portion is disposed at the same height as or above the ground plane of the base and below an upper surface of the lower die.

2. The laminated body manufacturing apparatus according to claim 1, wherein
a scaffold is provided at the same height as or above the ground plane of the base and below the upper surface of the lower die.

3. The laminated body manufacturing apparatus according to claim 2, wherein
a stepped portion from a height of the ground plane to an upper surface of the scaffold is provided.

4. The laminated body manufacturing apparatus according to claim 2, further comprising:
an elevating portion configured to lower the punched workpiece to a height above the ground plane and below the scaffold.

5. The laminated body manufacturing apparatus according to claim 4, wherein
at least a part of a side surface of the elevating portion is surrounded by the scaffold.

6. The laminated body manufacturing apparatus according to claim 4, wherein
at least a part of a conveyance path for conveying the workpiece lowered by the elevating portion is provided below the scaffold.

7. The laminated body manufacturing apparatus according to claim 1, further comprising:
a soundproof wall provided to cover at least an upper side and a side of the die unit, wherein
the soundproof wall is provided with an opening through which the laminated body is allowed to pass.

8. A motor core manufacturing system comprising:
the laminated body manufacturing apparatus according to any one of claims 1 to 7; and
a post-punching processing apparatus configured to perform post-punching processing on the laminated body, wherein
the laminated body manufacturing apparatus and the post-punching processing apparatus are installed on a common floor at the same height.

9. A laminated body manufacturing method performed using the manufacturing apparatus according to claim 1.

10. A laminated body manufacturing method in which a workpiece is punched into a predetermined shape by a die unit disposed in parallel on a scaffold at a predetermined height from a floor, and the punched workpiece is laminated in a lower die of the die unit to form a laminated body, the method comprising:
a lamination step of supporting the laminated body from below by a support portion provided between the floor and the lower die;
a discharge step of discharging the laminated body from the lower die;
a first conveyance step of conveying the discharged laminated body via a first conveyance path at a position higher than the scaffold;
a second conveyance step of lowering the laminated body via a second conveyance path connected to the first conveyance path; and
a third conveyance step of conveying the lowered laminated body via a third conveyance path connected to the second conveyance path and located at a position lower than the scaffold.
